## Europäisches Patentamt

## European Patent Office

## Office européen des brevets

(19)

(11) Veröffentlichungsnummer: **0 028 322**
**B1**

(12) **EUROPÄISCHE PATENTSCHRIFT**

(45) Veröffentlichungstag der Patentschrift:
**14.03.84**

(21) Anmeldenummer: **80106084.9**

(22) Anmeldetag: **07.10.80**

(51) Int. Cl.³: **G 01 N 21/64**

(30) Priorität: **06.11.79 US 91855**

(43) Veröffentlichungstag der Anmeldung:
**13.05.81 Patentblatt 81/19**

(45) Bekanntmachung des Hinweises auf die Patenterteilung:
**14.03.84 Patentblatt 84/11**

(84) Benannte Vertragsstaaten:
**DE FR GB**

(56) Entgegenhaltungen:
FR - A - 2 368 710
US - A - 4 006 360
US - A - 4 087 685

APPLIED OPTICS, Band 17, Nr. 10, 15. Mai 1978, Seiten 1624-1630, New York, U.S.A. D.M. RAYNER et al.: "Time resolved laser fluorosensors: a laboratory study of their potential in the remote characterization of oil" REVIEW OF SCIENTIFIC INSTRUMENTS, Band 49, Nr. 8, August 1978, Seiten 1186-1191, New York, U.S.A. V. KOESTER et al.: "Subnanosecond single photon counting fluorescence spectroscopy using synchronously pumped tunabele dye laser excitations" REVIEW OF SCIENTIFIC INSTRUMENTS, Band 48, Nr. 12, Dezember 1977, Seiten 1621-1627, New York, U.S.A. U. WILD et al.: "Measurement and analysis of

(73) Patentinhaber: **International Business Machines Corporation, Old Orchard Road, Armonk, N.Y. 10504 (US)**

(72) Erfinder: **Carr, Timothy William, 22 Kimball Drive, Poughkeepsie, N.Y. 12603 (US)**
Erfinder: **Froot, Howard Arthur, Bykenhulle Road, Hopewell Junction, N.Y. 12533 (US)**

(74) Vertreter: **Busch, Robert, Dipl.-Ing., Schönaicher Strasse 220, D-7030 Böblingen (DE)**

(56) Entgegenhaltungen: (Fortsetzung)
fluorescence decay curves"
OPTICS AND LASER TECHNOLOGY, Band 10, Nr. 6, Oktober 1978, Seiten 257-264, Ausg. IPC, Guildford, Surrey, G.B. G.R. FLEMING et al.: "CW modelocked dye lasers for ultra fast spectroscopic studies"
OPTICS AND LASER TECHNOLOGY, Band 11, Nr. 3, Juni 1979, Seite 124 "Fluorescence decay time spectrometer"

Verfahren zum Erfassen und Identifizieren von mit Rohteilen oder Werkstücken in einer Fertigungslinie
einhergehenden Materialzusammensetzungen und Fremdkörpern

Die Erfindung bezieht sich auf ein Verfahren zum Erfassen und Identifizieren von mit Halbleitersubstraten als Rohteile oder Werkstücke in einer Fertigungslinie einhergehenden Materialzusammensetzung und Fremdkörpern unter Anwenden der Fluoreszenzanalyse, indem die Frequenzbandenlagen durch Aufnahme der jeweils emittierten Fluoreszenzstrahlung und deren Auswertung anhand gespeicherter Referenzdaten Rückschlüsse auf die jeweils beteiligten Substanzen ermöglichen.

Wie im »Physikalischen Wörterbuch« von Wilhelm H. Westphal, erschienen im Springer-Verlag 1952, auf den Seiten 417 und 418 beschrieben, ermöglicht die Fluoreszenzfähigkeit zahlreicher Stoffe, besonders der organischen, aromatischen Verbindungen, die Verwendung dieser Eigenschaft zur chemischen Analyse; wobei die Erkennung der Substanzen durch die Lage der Fluoreszenzbanden und durch die Bandenstrukturen wesentlich erleichtert wird. Ein derartiges Verfahren gestattet jedoch nicht allgemein eine genaue analytische Bestimmung anorganischer Stoffe. Wenn auch hiermit die Erfassung des Uranylradikals von Salzen und Lösungen einiger seltener Erden ermöglicht wird, so ist doch für weite Bereiche der praktischen Anwendung hiermit eine entsprechende Verwendung ausgeschlossen.

Eine Möglichkeit zur praktischen Anwendung in Fertigungslinien ist allerdings in der US-A-4 087 685 beschrieben, wobei es darum geht, organische Schadstoffe, die in Halbleiterwerkstücken eingebettet und/oder hierauf aufliegen, zu identifizieren.

Hierzu werden die Werkstücke einer elektromagnetischen Strahlung ausgesetzt, so daß bei Vorhandensein solcher organischer Schadstoffe entsprechende Fluoreszenzbanden auftreten und die entsprechenden Emissionsfluoreszenzspektren bei Wellenlängenänderungen erfaßt werden können. Ein Vergleich dieser Spektren mit bekannten Spektren organischer Materialien, wie sie bei dem betreffenden Herstellungsverfahren in ihrem Auftreten zu erwarten sind, gestattet es, das Vergleichsergebnis direkt zur Schadstoffidentifizierung auszuwerten. In einem dort gezeigten Ausführungsbeispiel sind die Fluoreszenzemissionsspektren bekannter Substanzen in einer Rechenanlage gespeichert. Sowie Spektren entsprechender Schadstoffe auf den Werkstücken erfaßt werden, wird jeweils ein Vergleich mit den gespeicherten Daten von Spektren durchgeführt, bis sich Übereinstimmung ergibt und der betreffende Schadstoff identifiziert ist. Obgleich ein derartiges System ein äußerst wirksames Mittel und Verfahren zur Identifizierung von diskreten organischen Schadstoffen darstellt, läßt sich hiermit jedoch keinerlei Information hinsichtlich Materialabweichung und/oder -abänderung in der Werkstückzusammensetzung erhalten, welche das Resultat von beabsichtigten Prozeßschrittänderungen und/oder unerwünschter Beimengung irgendwelcher Fremdkörper sein können.

In der US-A-4 006 360 wird zum Durchführen einer Molekülfluoreszenzanalyse von der Unterscheidung zwischen der von an biologischen Partikeln gebundenen Farbstoffmolekülen abgestrahlten Emission und der von freien Farbmolekülen in der Grundlösung der Partikel abgestrahlten Hintergrund-Emission ausgegangen. Beim angewendeten Verfahren weden die Partikel in der Grundlösung mittels eines Lasers in Eigenschwingungskopplung bestrahlt, wobei die gebundenen Farbstoffmoleküle eine längere statistische Zerfallslebensdauer aufweisen als die freien Farbmoleküle, so daß die Fluoreszenzhelligkeit unter verzögerter Synchronisierung mit der Eigenschwingungsfrequenz erfaßt werden kann.

Andererseits ist es bekannt, Fluoreszenzspektren von Molekülen, welche durch entsprechende Fluoreszenzanregung erhalten werden, zur Erfassung beteiligter Elemente auszuwerten. In üblicher Weise wird dabei so vorgegangen, daß die Fluoreszenzemission in Abhängigkeit von der Frequenz monochromatischer Strahlung aufgezeichnet wird, so daß die Fluoreszenzbanden deutlich hervortreten.

Hierbei erhaltene Molekülspektren als solche erscheinen jedoch für die praktische Handhabung in der Fertigung nicht gut geeignet, da ihre automatische Auswertung zusätzlich einen mehr oder weniger großen Aufwand erfordert.

Hier will die Erfindung Abhilfe schaffen. Die Erfindung, wie sie im Anspruch 1 gekennzeichnet ist, löst die Aufgabe, ein Verfahren zum Erfassen und Identifizieren von mit Halbleitersubstraten als Rohteile oder Werkstücke in einer Fertigungslinie einhergehenden Materialzusammensetzungen und Fremdkörpern unter Anwenden der Molekül-Fluoreszenzanalyse zu schaffen dadurch, daß durch Erfassen und Auswerten von zeitabhängigen Abklingraten der jeweiligen Molekülfluoreszenz Materialzusammensetzung sowie -einbettung und -auflage von Fremdstoffen, einschließlich der Fremdatome in Halbleitersubstraten, ermittelt werden. Die Molekülfluoreszenz von Substraten entsteht unter entsprechender Einstrahlung beim Übergang angeregter Elektronen auf einen niedrigeren Energiezustand.

Dank der Erfindung liegt somit ein einfaches Verfahren vor, um schnell und in nichtzerstörender Weise Materialzusammensetzung sowie Auftreten von Fremdstoffen beim Durchgang von Halbleitersubstraten als Rohteile oder Werkstücke in einer Fertigungslinie zu überwachen und zu identifizieren. Ein weiterer Vorteil der Erfindung ist darin zu sehen, daß es hiermit möglich ist, ohne Unterbrechung des Herstellungsvorgangs in einer Fertigungslinie diese Überwachung durchzuführen.

Da es insbesondere bei der Halbleiterfertigung sehr darauf ankommt, mit immer kleineren Abmessungen, verbunden mit größeren Pakkungsdichten, zurechtzukommen, ist eine Materialzusammensetzungs- und Fremdkörperüberwachung in den einzelnen Prozeßstufen von ganz entscheidender Bedeutung, insbesondere auch mit Hinblick darauf, daß beigemengte oder an der Oberfläche mitgeführte Schadstoffe zu unerwünschten Ausfällen bzw. zu erhöhten Ausschußraten führen können.

Im folgenden wird die Erfindung mit Hilfe einer Ausführungsbeispielbeschreibung anhand der unten aufgeführten Zeichnungen näher erläutert. Es zeigt

Fig. 1 eine Blockdarstellung einer Einrichtung zur Durchführung des Verfahrens gemäß der Erfindung,

Fig. 2 eine graphische Darstellung in Form einer typischen Registrierung der Fluoreszenzintensität in Abhängigkeit von der Wellenlänge,

Fig. 3 eine graphische Darstellung für den zeitabhängigen Intensitätsverlauf bei einer Fluoreszenzbande,

Fig. 4 eine halblogarithmische graphische Darstellung für den abklingenden Teil des zeitabhängigen Vorgangs einer Fluoreszenzbande.

Zur Durchführung des erfindungsgemäßen Verfahrens wird bei einem der Ausführungswege das Rohteil oder Werkstück unter Verwendung von UV-Lichtimpulsen an der Grenze des sichtbaren Bereichs mit monochromatischem Laserlicht bestrahlt, wobei die Impulsdauer z. B. $10^{-9}$ s betragen kann.

Obgleich sich das erfindungsgemäße Verfahren generell in einem weiten Bereich hinsichtlich der zu untersuchenden Substanzen eignet, ist es speziell zur Anwendung auf elektronische Komponenten geeignet, wie z. B. Halbleiter-Gasentladungsbildschirme u. dgl. Zum Zwecke der Beschreibung wird die Erfindung allerdings in der Anwendung auf Siliciumhalbleitersubstrate behandelt, die eine Fertigungslinie durchlaufen, um Fertigteile, wie monolithisch integrierte Halbleiterschaltungen, zu erstellen.

Im einzelnen kann das zu bearbeitende Substrat über das Objektiv eines Lichtmikroskops bestrahlt werden, um ein hohes Auflösungsvermögen, z. B. in der Größenordnung von 1 μm, zu erzielen. Auf diese Weise läßt sich die Wirkung der Materialzusammensetzung nach der Herstellung, in Abhängigkeit entweder von Verfahrensgangänderungen oder von abträglichen Beimengungen an Schadstoffen, auf Fluoreszenzemissions-Lebensdauer der angeregten Elektronenzustände der beteiligten Materialien untersuchen. Durch geeignete Wahl der jeweiligen Lichtwellenlänge, z. B. der einer Laserstrahlung, läßt sich eine jeweils geeignete Anregung der verschiedensten Halbleiterstrukturen herbeiführen. Ist so z. B. ein Halbleitesubstrat mit übereinanderliegenden Überzügen, bestehend aus Siliciumdioxid und Siliciuimnitrid versehen, dann kann die Siliciumnitritlage bevorzugt der betreffenden Untersuchung unterworfen werden, ohne daß die Siliciumdioxidschicht hieran beteiligt ist. Durch Wahl eines geeigneten Detektors lassen sich Emissions- und Absorptionsspektren sowohl eines Halbleiterbauelementes als auch jedweder absorbierter oder beigemengter Schadstoffe, die hierbei auftreten können, untersuchen und aufzeichnen. Ein derartiges Stoffuntersuchungsverfahren erfordert keine spezielle Zubereitung der jeweiligen Probe, sondern kann vielmehr an der jeweiligen Stelle in der Fertigungslinie ohne Entnahme hieraus einer nichtzerstörenden Analyse unterworfen werden, so daß dank der Erfindung der Fertigungsprozeß selbst keine nennenswerte Unterbrechung zu erfahren braucht.

Werden Siliciumhalbleiterbauelemente mit an der Grenze des sichtbaren Bereichs liegendem UV-Licht einer Energie von 2 bis 6 eV bestrahlt, dann weden infolge entsprechender Anregung der Elektronenzustände die Moleküle im Halbleiter auf entsprechend höhere Energiestufen gebracht. Hierbei kann der eingenommene Elektronenzustand entweder aus dem Übergang eines Elektrons aus einer ersten Schale eines Ions oder Moleküls in eine höhere Energiestufe des gleichen Teilchens oder aber in ein kollektives Energieband des betreffenden Systems, genannt Leitungsband, hervorgehen. Wenn wie im ersten Fall das angeregte Elektron sich noch im gleichen Ion oder Molekül befindet, dann wird dieser neue Zustand durch ein Exiton beschrieben, wobei die zugehörige Absorptionsbande mit Exitonsband bezeichnet wird. Erfolgt jedoch wie im zweiten Fall der Elektronenübergang bei entsprechender Anregung auf eine gänzlich oder teilweise einem anderen Atom zugehörigen Bahn, dann beruht die hierbei beobachtete Absorption generell auf Ladungsübergangsprozeß oder interionischem Übergang.

Molekül-Fluoreszenz und -Phosphoreszenz tritt auf, wenn ein Elektron in einen niedrigeren Elektronenzustand, verbunden mit einer Energieemission in Form von Licht, übergeht. Dieser Vorgang wird als strahlender Übergang bezeichnet. Die Wahrscheinlichkeit, daß ein im angeregten Zustand befindliches Molekül spontan einen strahlenden Übergang auf einen niedrigeren Elektronenzustand aufweist, läßt sich durch folgende Beziehung ausdrücken:

$$A_{mn} = \frac{64\,\pi^4\,\omega_{mn}^3\,e^2}{3\,h}\,g_m\,D_{mn}.$$

Hierin ist $A_{mn}$ die einsteinsche Übergangswahrscheinlichkeit der spontanen Emission, nämlich der Bruchteil der Molekülanzahl der in einer Sekunde aus dem Zustand n in den Zustand m übergeht, $\omega_{mn}$ stellt die Übergangsenergie in Form einer Wellenzahl dar, $g_m$ ist die Entartung des Zustands m, und $D_{mn}$ bedeutet die Dipolkraft oder das Quadrat des Übergangsmomentenintegrals, während die anderen Symbole die übliche Bedeutung besitzen.

Das Übergangsmomentenintegral ist folgendermaßen definiert:

$$R_{mn} = \int \Psi m \ \vec{M} \ \Psi n \ d\tau$$

Hierin bedeuten $\Psi m$ und $\Psi n$ die Wellenfunktionen für den Elektronenausgangs- und -endzustand, und $\vec{M}$ ist der Momentenvektor, wobei das Integral über das gesamte Volumenelement genommen ist. Die Größe dieses Integrals bestimmt in weitem Maße die Emissionswahrscheinlichkeit. Wird dieses Integral Null, dann liegt ein verbotener Übergang vor. Ist jedoch das Integral von Null verschieden, dann ist der Übergang erlaubt.

Die Lebensdauer eines Elektrons im angeregten Zustand $(\tau_0)$ entspricht der Zustandslebensdauer, wenn Strahlungsemission die einzige Art der Energieabgabe darstellt. Diese Strahlungslebensdauer ist auf den einsteinschen Koeffizienten für die spontane Emission gemäß der Beziehung $\tau_0 = 1/A_{mn}$, gemessen in Sekunden pro Übergang, bezogen. Doch stellt die Lichtemission die einzige Möglichkeit der Energieabgabe durch ein angeregtes Molekül dar, das in einen niedrigeren Elektronenenergiezustand zurückfällt. Es gibt noch einige nichtstrahlende Übergänge, durch die ein angeregtes Molekül Energie verlieren kann. Hier sind insbesondere interne Umsetzung wie auch molekülinterne Wechselwirkung und Energieaustausch zwischen verschiedenen Molekülen zu nennen.

Die interne Umsetzung ergibt sich aus einem nichtstrahlenden Übergang eines Elektrons aus dem angeregten Zustand auf einen über dem Grundzustand liegenden niedrigeren Elektronenenergiezustand gleicher Multiplizität, nämlich einem Schwingungsenergieniveau. Ein derartiger Vorgang tritt ein, wenn die Potential-Energie-Kurve eines höheren angeregten Zustandes ein niedriger liegendes Schwingungsenergieniveau des niedrigeren Elektronenzustandes kreuzt oder diesem nahekommt. Der niedriger liegende Elektronenzustand kann einen beträchtlichen Anteil an Schwingungsenergie enthalten, jedoch geht diese rasch in Molekülzusammenstößen unter Umsetzung in Wärme verloren. Interne Umsetzung auf den Grundzustand der Elektronen führt zu einer Verminderung der Fluoreszenzintensität. Interne Umsetzung von angeregten höheren Zuständen zu angeregten niedriger liegenden Zuständen liegt ziemlich häufig vor, speziell bei mehratomigen Molekülen mit sich zahlreich überschneidenden Potentialenergieoberflächen.

Molekülinterne Wechselwirkung wirkt sich in einem nichtstrahlenden Übergang von einem angeregten höheren Zustand zu einem niedriger liegenden Elektronenzustand unterschiedlicher Multiplizität aus. Ein derartiger Vorgang ist zu verzeichnen, wenn die Potential-Energie-Kurve des höher liegenden Zustandes die des niedriger liegenden Zustandes kreuzt, vorausgesetzt, daß das Schwingungsenergieniveau unterhalb desjenigen Zustandes liegt, auf welchem das Molekül anfänglich angeregt worden ist.

Einer der wichtigsten Vorgänge, durch den ein angeregter Elektronenzustand Energie abgeben kann, ist der nichtstrahlende Übergang von einem Molekül auf das andere. Der Begriff intermolekularer Energieaustausch bezieht sich auf den in einem erfolgenden strahlenden Energieübergang von einem Donatormolekül D* auf ein Akzeptormolekül A. Diese Art der Reaktion läßt sich wie folgt angeben:

$$D^* + A \rightarrow A^* + D$$

Verschiedene Erfordernisse müssen erfüllt sein, damit eine derartige Reaktion zu einer bedeutsamen Art der Energiefreisetzung wird. Zunächst muß das Energieniveau des angeregten Donatormoleküls höher sein als das Energieniveau des Akzeptormoleküls, auf die die Energie übertragen werden soll. Weiterhin muß die Strahlungslebensdauer des angeregten Donators länger sein als die Zeitdauer für die Ausführung der Reaktion. Ist dies nicht der Fall, dann würde der angeregte Donator durch Strahlungsemission Energie freisetzen, bevor bimolekulare Auslöschung stattfinden kann. Schließlich ist es notwendig, daß der Gesamtspinn-Drehimpuls des Systems sich nicht ändert. Letztere Bedingung ist auch als Wigner-Kraft-Erhaltungssatz bekannt.

Gemäß der Theorie gibt es zwei verschiedene Mechanismen für den nichtstrahlenden Übergang der Elektronenenergie. Während sich der eine Energieübergang aus dem Zusammenstoß zweier Moleküle ergibt, beruht der andere Energieübergang auf den Austausch zwischen zwei Molekülen, die um einen Abstand voneinander getrennt sind, der größer ist als ihr Wirkungsquerschnitts-Durchmesser.

Energieübertragung durch Austausch oder Stoß erfolgt in einem Vorgang, bei dem das angeregte Donatormolekül D* und das Akzeptormolekül A sich einander derart nähern, daß ihre beiden Elektronenwolken einander überlagern. Elektronen in einem solchen Überlagerungsbereich lassen sich dabei nicht mehr unterscheiden. Ein Austauschmechanismus liegt vor, wenn das angeregte Elektron des Donators beim Akzeptor und ein Elektron im Grundzustand des Akzeptors beim Donator auftritt. Die Moleküle bewegen sich dann unter hierbei erfolgendem Energieaustausch voneinander weg.

Eine zweite Art des Energieaustauschmechanismus ist in einer Resonanzanregungsübertragung, auch Fernwirkungsenergieübertragung genannt, zu sehen. Bei einem derartigen Vorgang wird die Anregungsenergie zwischen zwei Molekülen ausgetauscht, die um eine Distanz voneinander getrennt sind, die beträchtlich größer als ihr Wirkungsquerschnitts-Durchmesser ist. Dieser Vorgang könnte auf einer schwachen Wechselwirkung von Dipol zu Dipol zwischen Donator- und Akzeptormolekülen beruhen. Die Ableitung einer diesbezüglichen quantenmechanischen Beziehung findet sich z. B. in »Z. Electrochem.«, Band 64, 1960, Seite 157, wo gezeigt wird, daß die Wahrscheinlichkeit für die Energieübertragung vom Emissionsspektrum des Donators und dem Absorptionsspektrum des Akzeptors abhängt. Überlappt das Emissionsspektrum des Donators stark das Absorptionsspektrum des Akzeptors, dann ist die Wahrscheinlichkeit der Energieübertragung hoch. Offensichtlich hängt die Rate der Energieübertragung über diesen Mechanismus vom Abstand beider Moleküle ab. Als Ausdruck für die Beziehung der Ratenkonstanten bei Resonanz-Energieübertragung in Abhängigkeit von diesem Abstand, läßt sich angeben:

$$(D^* \rightarrow A^*) = 1/\tau_D \, (Ro/R)^6$$

Hierin bedeuten:

$\tau_D$ die effektive mittlere Donatorlebensdauer,
R den Abstand zwischen D* und A,
Ro den kritischen Abstand zwischen Donator und Akzeptor, bei welchem eine Emission von D* der Energieübertragung von D* auf A gleich ist.

Sobald diese oder andere oberhalb des Grundzustandes liegenden Elektronenzustände entweder über einen strahlenden oder einen nichtstrahlenden Übergang besetzt sind, führt dies zu einer Lichtabstrahlung bzw. finden die obenerwähnten Übergänge statt. Hierdurch entsteht eine typische Emissionsbande, die sich sozusagen als »Fingerabdruck« des betreffenden analysierten Materials ansehen läßt und mit Emissionsspektrum zu bezeichnen ist.

Werden Fremdatome in einen Halbleiter eingebracht oder hierin eingemengt, dann kann im Emissionsspektrum des betreffenden Bauelements eine Änderung eintreten oder auch nicht. Dies beruht darauf, daß es nichtstrahlende Übergänge gibt, die wie oben erwähnt, möglich sind. Was sich jedoch ändert, wenn Fremdatome als Leitfähigkeitstyp ändernde Dotierung oder als Schadstoffe in das Material eingebracht werden, ist die Lebensdauer des angeregten Zustandes. Das Einbringen von Fremdatomen führt zu anderen Inaktivierungsbahnen, womit Lebensdauer bzw. Rate, mit der Licht vom angeregten Elektronenzustand emittiert wird, beeinflußt wird.

Das wesentliche vorliegender Erfindung ist darin zu sehen, daß sich die Lebensdauer der verschiedenen Elektronenzustände mit räumlicher Auflösung im Halbleiter in der Größenordnung von 1 µm direkt messen läßt. Die Art und Weise, in der eine derartige Messung durchgeführt werden kann, sowie das hierzu erforderliche Instrument werden nachstehend beschrieben.

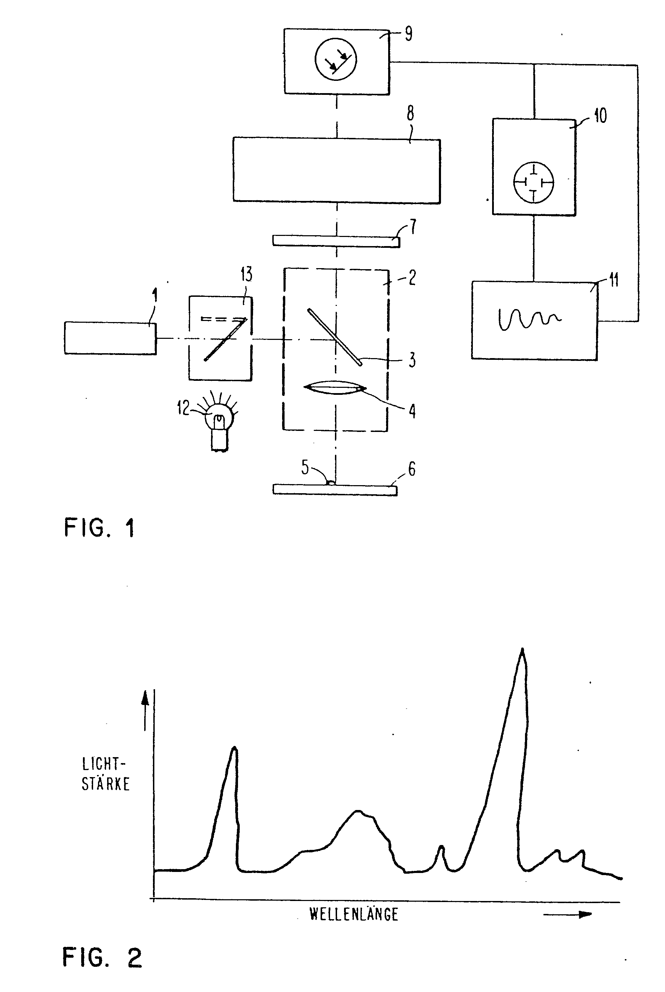

In Fig. 1 ist eine Anregungslichtquelle 1 in der Lage, Impulse mit einer im ps-Bereich liegenden Impulsdauer in verschiedenen Wellenlängen abzugeben. Hierzu lassen sich handelsübliche Laser heranziehen.

Diese Lichtquelle wird zusammen mit einem ebenfalls handelsüblichen Lichtauffallmikroskop zur Ablenkung und Fokussierung der anregenden Lichtstrahlen auf Probe 5 verwendet. Eine derartige Einrichtung 2 enthält hierzu einen Strahlablenker 3 und ein Linsensystem 4. Der zu bestrahlende Oberflächenbereich der Probe 5 kann mit Hilfe eines üblichen verstellbaren Objekttisches 6 dem anregenden Lichtstrahl ausgesetzt werden.

Das von der Probe 5 emittierte Licht gelangt über ein Schmalbandfilter 7, das den Durchgang reflektierter Anteile der Grundanregung verhindert, auf einen ebenfalls handelsüblichen Monochromator 8, der zur Abtastung des emittierten Lichtes dient.

Ein handelsüblicher Strahlungsempfänger 9, wie z. B. ein Photovervielfacher, erfaßt das emittierte Licht. Das von diesem Photovervielfacher 9 abgegebene elektrische Signal läßt sich in einem handelsüblichen, speichernden Oszilloskop 10 speichern und mittels eines Koordinatenschreibers 11 zur Aufzeichnung heranziehen.

Eine visuelle Musterung der jeweiligen Probe 5 läßt sich durch wahlweises Einschalten einer normalen Lichtquelle 12 in den Strahlengang des Lichtauffalmikroskops 2 mit Hilfe einer Schwenkspiegelvorrichtung 13 in einfachster Weise durchführen.

Um ein Lichtemissionsspektrum von einer Probe 5 zu erhalten, wird sie auf den verstellbaren Objekttisch 6 des Lichtauffallmikroskops 2 aufgebracht und eine geeignete Objektivlinse in den Strahlengang des Mikroskops, je nach der Größe des zu untersuchenden Bereichs, eingeschwenkt, um die Probe 5 in den Brennpunkt zu bringen. Nach visueller Musterung der Probe 5 wird mit Hilfe der Schwenkspiegelvorrichtung 13 der Strahlengang von der normalen Lichtquelle 12 auf den Laser 1 umgestellt. Der Laser 1 kann entweder im Impulsbereich oder kontinuierlich betrieben werden. Der Monochromator 8 tastet den Wellenlängenbereich zwischen der Wellenlänge des Laserlichtstrahls bis zum Infrarotbereich ab. Die Ausgangssignale des Photovervielfachers 9 werden mit Hilfe des Koordinatenschreibers 11 auf einen Registrierstreifen aufgezeichnet. Die so aufgezeichnete Kurve stellt die Lichtstärke in Abhängigkeit von der Wellenlänge dar, wie es die graphische Darstellung nach Fig. 2 zeigt.

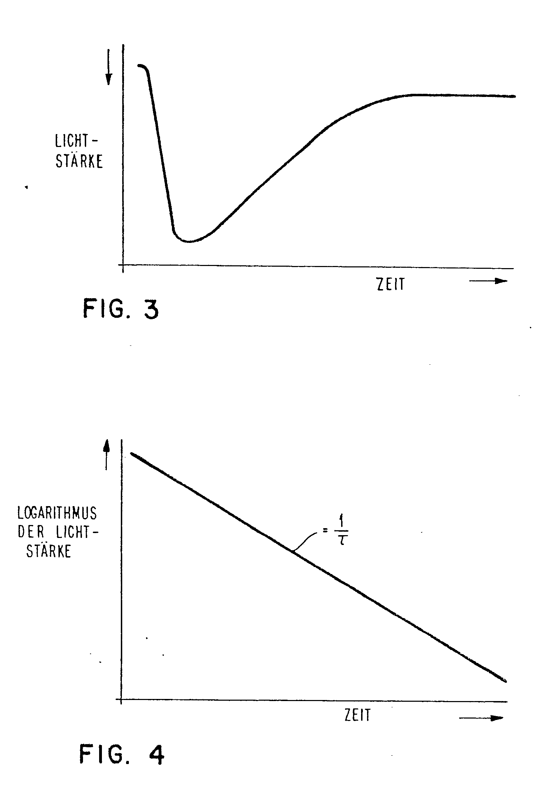

Zur Ermittlung der jeweiligen Lebensdauer der angeregten Elektronenzustände wird der Laser 1 zweckmäßigerweise auf Impulsbetrieb geschaltet, während der Monochromator 8 auf eine spezielle Wellenlänge eingestellt wird. Die betreffende Wellenlänge wird dem Emissionsspektrum entnommen. Der eine relativ kurze Anstiegszeit erfassende Photovervielfacher 9 wird mit einem ebenfalls eine relativ kurze Anstiegszeitdauer erfassenden, speichernden Oszilloskop 10 verbunden, das seinerseits an einen Koordinatenschreiber 11 angeschlossen ist. Die sich ergebende Aufzeichnung stellt die erfaßte Lichtstärke bei der eingestellten Wellenlänge als Funktion der Zeit dar, wie in der graphischen Darstellung nach Fig. 3 gezeigt. Zur Berechnung der Lebensdauer des angeregten Zustandes wird der Fluoreszenz-Abklingbereich in der graphischen Darstellung nach Fig. 3 als Logarithmus der abfallenden Lichtstärke in Abhängigkeit von der Zeit, wie in der graphischen Darstellung nach Fig. 4 gezeigt, aufgetragen. Die Neigung der sich in dieser graphischen Darstellung ergebenden Geraden stellt die Rate der Übergangskonstanten dar, die dem Reziprokwert der Lebensdauer entspricht. Die Lebensdauer ist in Fig. 4 mit $\tau$ bezeichnet.

Wie andererseits bereits gemäß vorgenannter US-A-4 087 685 für andere Zwecke verwendet, lassen sich die Fluoreszenzabklingraten vorgegebener Halbleiterzusammensetzungen und Beimengungen bei Halbleitersubstraten, wie sie nach Abschluß der Verfahrensschritte vorliegen sollen, im Speicher einer Rechenanlage speichern, so daß sich in Echtzeitanalyse bei der Fertigung ergebende Daten mit diesen gespeicherten Werten verglichen werden können, um so jeweils in einem eindeutig zuordnungsbaren Vergleichsvorgang ein Analysenergebnis der betreffenden Substratzusammensetzung bzw. des Fremdkörperzusatzes erhalten zu können. Wie bereits oben erwähnt, können Zusammensetzungsmodifikationen der verschiedenen Substratelemente jeweils das Ergebnis vorgegebener Prozeßmodifikationen sein, z. B. durch Bilden dotierter Halbleiterzonen, Auftragen dielektrischer Isolationsüberzüge sowie anderer Schichten und aus Zusammensetzungsabänderungen aufgrund absorbierter und/oder beigemengter Fremdatome, wie von Photolackauftragungsschritten, Ätzverfahren u. dgl. Die gespeicherten Daten können zulässige Toleranzbereiche für prozeßbedingte Zusammensetzungsmodifikationen ebenso wie auch sonst zulässige Abweichungen oder Grenzbedingungen für unerwünschte Schadstoffe berücksichtigen, die Rohteilen oder Werkstücken beigemengt bzw. zugeführt und/oder hiervon absorbiert sein können. Die Messungen und Analysen lassen sich entweder im Fertigungsfluß selbst oder getrennt hiervon durchführen.

## Patentansprüche

1. Verfahren zum Erfassen und Identifizieren von mit Halbleitersubstraten als Rohteile oder Werkstücke in einer Fertigungslinie einhergehenden Materialzusammensetzungen und/oder Fremdkörperteilchen unter Anwenden der Fluoreszenzanalyse, indem die Frequenzbandenlagen durch Aufnahme des von den Rohteilen oder Werkstücken emittierten und über einen hinsichtlich der Frequenz des durchgelassenen Lichtes kontinuierlich veränderbaren Monochromator übertragenen Fluoreszenzspektrums mittels eines Strahlungsempfängers ermittelt und die hierbei gemessenen Fluoreszenzbanden in einem Ausgabegerät durch Vergleich gespeicherter, für die in Verbindung mit den Rohteilen oder Werkstücken zu erwartenden Substanzen wahlweise vorgebbarer Fluoreszenzbanden-Sollwerte mit durch Messung ermittelten Fluoreszenzbanden-Werten ausgewertet werden, dadurch gekennzeichnet, daß zum Bestimmten von in die Halbleitersubstrate eingebrachten Fremdatomen und/oder hierauf vorhandenen bzw. hiervon mitgeführten Fremd- sowie Schadstoffen eine Molekülfluoreszenzanalyse in Verbindung mit dem Auswerten von mit der jeweils eingestellten, durch Laserstrahlung angeregten Fluoreszenzbande einhergehendem, zeitabhängig abklingendem Vorgang ausgeübt wird, indem der Vergleich mit den für jeden Verfahrensschritt in der Fertigungslinie, bei welchem das jeweilige Rohteil oder Werkstück eine Materialauftragung, -abtragung und/oder -zusetzung erfährt, einschließlich den für zulässige Materialabweichungswerte charakteristischen, in Form von Abklingraten-Daten der betreffenden, zeitabhängigen Vorgänge gespeicherten Fluoreszenzbanden-Sollwerten durchgeführt wird.

2. Verfahren nach Anspruch 1, dadurch gekennzeichnet, daß die Laserstrahlung gepulst wird.

3. Verfahren nach Anspruch 2, dadurch gekennzeichnet, daß eine Impulsdauer von $10^{-9}$ s eingestellt wird.

4. Verfahren nach den Ansprüchen 1 bis 3, dadurch gekennzeichnet, daß eine nahe dem sichtbaren Bereich liegende Ultraviolettlichteinstrahlung im Energiebereich zwischen 2 bis 6 eV erfolgt.

5. Verfahren nach den Ansprüchen 1 bis 4, gekennzeichnet durch eine von der Fertigungslinie getrennte Durchführung.

## Claims

1. Method of detecting and identifying material compositions and/or impurities comprised with semiconductor substrates as blanks or workpieces in a manufacturing line, using the fluorescence analysis in that the frequency band positions, by incorporating the fluorescence spectrum that is emitted by the blanks or workpieces and transferred via a monochromator continuously variable concerning frequency of the transmitted light, are determined by means of a radiation detector, and where the fluorescence bands thus measured are evaluated in an output unit by comparing stored nominal fluorescence band values selectively applicable to the substances to be expected in connection with the blanks or workpieces, with fluorescence band values obtained by measuring, characterized in that for determining foreign atoms introduced into the semiconductor substrates and/or impurities or contaminants existing thereon or carried along thereby a molecular fluorescence analysis is performed in connection with the evaluation of the process which decays as a factor of time and takes place with the respectively set fluorescence band excited by laser irradiation, in that the comparison is carried out with the nominal fluorescence band values that are characteristics for each process step in the production line where the respective blank or workpiece is subjected to a coating, removal and/or admixture of material, including admissible variation values, and that are stored in the form of decay rate data of the respective time-dependent processes.

2. Method as claimed in claim 1, characterized in that the laser irrediation is at a pulsed rate.

3. Method as claimed in claim 2, characterized in that a pulse duration of $10^{-9}$ s is set.

4. Method as claimed in any one of claims 1 to 3, characterized in that an ultraviolett irradiation with energies ranging between 2 to 6 eV is carried out.

5. Method as claimed in any one of claims 1 to 4, characterized by an implementation separated from the production line.

## Revendications

1. Procédé pour détecter et identifier des compositions de matières et de corps étrangers entrant dans une chaine de fabrication utilisant des substrats semiconducteurs comme parties brutes ou pièces d'ouvrage où on recourt à l'analyse de fluorescence, des bandes de fréquence étant détectées par réception au moyen d'un radiorécepteur du spectre de radiations fluorescentes émises par des pièces brutes ou des pièces d'ouvrage et transmises à travers un monochromateur variant en continu en fonction de la fréquence de la lumière transmise, les bandes fluorescentes ainsi mesurées étant analysées dans une unité de sortie par comparaison de valeurs théoriques de bandes fluorescentes stockées et sélectivement applicables en fonction des matières que l'on escompte obtenir à partir desdites pièces brutes ou pièces d'ouvrge avec des valeurs de bandes fluorescentes détectées, caractérisé en ce que, afin de déterminer les corps étrangers introduits dans les substrats semiconducteurs et/ou les éléments étranges ou nocifs contenu ou apparaissant dans lesdits substrats, il est procédé à une analyse de fluorescence moléculaire en tenant compte des paramètres du phénomème de vitesse de décroissance affectant les bandes de fréquence respecitives excitées par la radiation laser, la comparaison étant établie avec les valeurs théoriques afférentes à chaque étape dudit procédé dans la ligne de fabrication, où la partie brute ou pièce d'ouvrage est soumise à des opérations de revetement, d'enlèvement ou d'apport de matériau, y compris les valeurs théoriques de bandes de fluorescence caractéristiques des tolérances des matériaux et stockées sous la forme de taux de décroissance correspondant à chaque étape de décroissance.

2. Procédé selon la revendication 1, caractérisé en ce que la radiation laser est une radiation pulsée.

3. Procédé selon la revendication 2, caractérisé en ce qu'on choisit une durée d'impulsion égale à $10^{-9}$.

4. Procédé selon les revendications 1 à 3, caractérisé en ce qu'il se produit une radiation incidente ultraviolette proche du spectre visible dans le domaine d'énergie compris entre 2 et 6 eV.

5. Procédé selon les revendications 1 à 4, caractérisé en ce que son application est effectué séparément de la ligne de fabrication.

**FIG. 1**

**FIG. 2**

FIG. 3

FIG. 4